# EUROPÄISCHE PATENTANMELDUNG

(11) **EP 1 065 036 A2**
(43) Veröffentlichungstag der Anmeldung: **03.01.2001**
(21) Anmeldenummer: 00113131.7
(22) Anmeldetag: 29.06.2000
(51) Int. Cl.: B29C 45/72

(54) **Verfahren und Vorrichtung zum Handhaben eines Kunststofferzeugnisses**

(30) Priorität: 30.06.1999 DE 19929989; 15.02.2000 DE 10006608
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Ein Verfahren und eine Vorrichtung dienen zum Handhaben eines Kunststofferzeugnisses (20) nach dessen Entnahme aus einem Werkzeug (12) einer Kunststoff-Spritzgießmaschine (10). Das Kunststofferzeugnis (20) weist mindestens einen ebenen Oberflächenabschnitt (24a) auf. Der Oberflächenabschnitt (24a) wird durch Anlegen einer Kühlplatte (36) flächig gekühlt. Nach dem Anlegen der Kühlplatte (36) wird das Kunststofferzeugnis (20) mit dem ebenen Oberflächenabschnitt (24a) voran in eine das Kunststofferzeugnis (20) im übrigen umgebende Aufnahme (32) eingeführt und dort an mindestens einem weiteren Oberflächenabschnitt (22a) gekühlt.

## Beschreibung

Die Erfindung betrifft ein Verfahren zum Handhaben eines Kunststofferzeugnisses nach dessen Entnahme aus einem Werkzeug einer Kunststoff-Spritzgießmaschine, wobei das Kunststofferzeugnis mindestens einen ebenen Oberflächenabschnitt aufweist und der Oberflächenabschnitt durch Anlegen einer Kühlplatte flächig gekühlt wird.

Die Erfindung betrifft ferner eine Vorrichtung zum Handhaben eines Kunststofferzeugnisses nach dessen Entnahme aus einem Werkzeug einer Kunststoff-Spritzgießmaschine, wobei das Kunststofferzeugnis mindestens einen ebenen Oberflächenabschnitt aufweist und ferner die Vorrichtung eine Kühlplatte sowie Mittel zum Anlegen der Kühlplatte an den ebenen Oberflächenabschnitt umfaßt.

Ein Verfahren und eine Vorrichtung der vorstehend genannten Art sind aus der DE-U-94 02 931 bekannt.

Die vorliegende Erfindung betrifft primär das Handling von dickwandigen, dosenartigen Kunststofferzeugnissen, insbesondere von Dosen für den Kosmetikbedarf, beispielsweise Cremedosen, die durch Kunststoff-Spritzgießen hergestellt wurden. Diese Kunststofferzeugnisse sind üblicherweise kegelstumpfförmig gestaltet und weisen eine sich von oben nach unten verjüngende Form auf. Sie haben unten einen ebenen Boden und oben üblicherweise ein Gewinde zum Aufschrauben eines Verschlußdeckels. Die Erfindung ist jedoch auf dieses Anwendungsgebiet nicht beschränkt.

Aus der eingangs genannten DE-U-94 02 931 ist eine Vorrichtung zur Entnahme von Spritzgußteilen aus einem Spritzgußwerkzeug bekannt. Bei dieser bekannten Vorrichtung werden die im Spritzgußwerkzeug hergestellten, ebenen Teile mittels einer Hand eines Handlingsystems aus den Formhohlräumen entnommen. Hierzu ist die Hand mit einer Greiferplatte versehen, an deren Oberfläche die ihr zugewandte Seite des Spritzgußteils formschlüssig anlegbar und anpreßbar ist. Die Greiferplatte kann dabei mit einer Kühleinrichtung versehen sein. Die Kühleinrichtung besteht vorzugsweise aus Kühlbohrungen in der Greiferplatte, die von einem Kühlmedium durchflossen werden.

Die bekannte Vorrichtung ist somit darauf beschränkt, ebene Spritzgußteile zu handhaben.

Aus der EP-B1-0 266 804 ist weiterhin eine Trageeinrichtung zum Halten und Kühlen eines noch warmen Vorformlings bekannt. Unter einem Vorformling ist dabei eine tubenartige Röhre aus Kunststoff zu verstehen, die als Zwischenprodukt in großer Stückzahl hergestellt wird. Aus Vorformlingen können dann zu einem späteren Zeitpunkt Kunststoff-Hohlkörper unterschiedlichster Formgebung hergestellt werden, beispielsweise Getränkeflaschen oder Behälter für Haushaltsreinigungsmittel. Bei der bekannten Einrichtung ist eine gekühlte Aufnahme vorgesehen, die sich von dem offenen Ende zu dem geschlossenen Ende nach innen verjüngt, wobei ihre konische Form mit der Außenkontur des Vorformlings übereinstimmt. Wenn der Vorformling durch Anlage an die konische Aufnahme gekühlt wird und demzufolge schrumpft, kann er in die gekühlte Aufnahme hineingezogen werden, derart, daß die konische Außenfläche des Vorformlings immer flächig an der entsprechenden Gegenfläche der Aufnahme anliegt. Zum Einziehen des Vorformlings wird vorzugsweise eine Saugvorrichtung verwendet.

Diese bekannte Vorrichtung hat damit den Nachteil, daß sie ausschließlich für konische Vorformlinge geeignet ist, bei denen der ganz wesentliche Anteil der Oberfläche auf die konische Umfangsfläche entfällt.

Bei Kunststofferzeugnissen der weiter oben genannten Art, beispielsweise bei relativ gedrungenen, dickwandigen Cremedosen, liegen die Verhältnisse anders. Hier teilt sich die Oberfläche zu gleichwertigen Anteilen auf die Umfangsfläche und die ebene Bodenfläche auf. Derartige Kunststofferzeugnisse können daher mit keiner der beiden vorgenannten bekannten Vorrichtungen gehandhabt, d.h. insbesondere bei der Entnahme aus einem Werkzeug einer Kunststoff-Spritzgießmaschine gekühlt werden.

Der Erfindung liegt daher die Aufgabe zugrunde, eine Vorrichtung der eingangs genannten Art dahingehend weiterzubilden, daß auch Kunststofferzeugnisse mit komplexer Formgebung wirksam bei der Entnahme aus dem Werkzeug gehandhabt, insbesondere gekühlt werden können.

Diese Aufgabe wird bei einem Verfahren der eingangs genannten Art erfindungsgemäß dadurch gelöst, daß nach dem Anlegen der Kühlplatte das Kunststofferzeugnis mit dem ebenen Oberflächenabschnitt voran in eine das Kunststofferzeugnis im übrigen umgebende Aufnahme eingeführt und dort an mindestens einem weiteren Oberflächenabschnitt gekühlt wird.

Bei einer Vorrichtung der eingangs genannten Art wird die Aufgabe erfindungsgemäß dadurch gelöst, daß die Vorrichtung weiterhin eine zum Kunststofferzeugnis im wesentlichen komplementäre und kühlbare Aufnahme aufweist, und daß Mittel vorgesehen sind, um nach dem Anlegen der Kühlplatte das Kunststofferzeugnis mit dem ebenen Oberflächenabschnitt voran in die Aufnahme einzuführen und dort an mindestens einem weiteren Oberflächenabschnitt zu kühlen.

Die der Erfindung zugrunde liegende Aufgabe wird auf diese Weise vollkommen gelöst.

Mittels des erfindungsgemäßen Verfahrens und der erfindungsgemäßen Vorrichtung ist es nämlich erstmals möglich, relativ gedrungene, dickwandige Kunststofferzeugnisse bei der Entnahme aus dem Werkzeug einer Kunststoff-Spritzgießmaschine effektiv zu kühlen. Auf diese Weise wird die Zykluszeit beim Herstellen derartiger Erzeugnisse drastisch vermindert, beispielsweise halbiert. Eine derartige deutliche Verminderung der Zykluszeit führt zu einer entsprechenden Erhöhung der Ausbringung der Kunststoff-Spritzgießmaschine und damit zu erheblichen wirtschaftlichen Vorteilen. Da Kunststofferzeugnisse der hier interessierenden Art bereits seit Jahrzehnten bekannt sind, war es somit auch nicht naheliegend, auf der Grundlage der vorbekannten Handlingverfahren und -vorrichtungen das erfindungsgemäße Verfahren und die erfindungsgemäße Vorrichtung aufzufinden.

Die Erfindung hat weiterhin den Vorteil, daß das Kunststofferzeugnis unmittelbar nach dem Auswerfen aus dem Formhohlraum des Werkzeuges oder sogar schon während des Auswerfvorganges durch Anlegen der Kühlplatte zumindest im Bereich des ebenen Oberflächenabschnitts schon einmal gekühlt wird, während sich dann nach dem Einführen des Kunststofferzeugnisses in die Aufnahme der weitere Kühlvorgang an den weiteren Oberflächenabschnitten anschließt.

Bei einer bevorzugten Weiterbildung des erfindungsgemäßen Verfahrens wird das Kunststofferzeugnis bis auf einen Luftspalt an die Aufnahme herangeführt und alsdann an dem weiteren Oberflächenabschnitt mittels eines durch den Luftspalt geleiteten Mediumstromes gekühlt. Hierzu wird bei einem Ausführungsbeispiel einer erfindungsgemäßen Vorrichtung ein Distanzmittel vorgesehen, um im eingeführten Zustand des Kunststofferzeugnisses einen Luftspalt zwischen Kunststofferzeugnis und Aufnahme einzustellen.

Diese Maßnahmen haben zum einen den Vorteil, daß eine effektive Kühlung durch einen fließenden Mediumstrom möglich wird. Zum anderen ergibt sich der Vorteil, daß das noch warme und damit weiche Kunststofferzeugnis nicht versehentlich an den komplementären Oberflächen der Aufnahme festkleben kann, da es von der Aufnahme durch den Luftspalt getrennt ist.

Die bei diesen Ausführungsbeispielen verwendeten Distanzmittel können bei einer weiteren Ausbildung der Erfindung dadurch gekennzeichnet sein, daß das Kunststofferzeugnis und die Aufnahme sich in Einführrichtung verjüngen, und daß die Distanzmittel als Lageregelung des Kunststofferzeugnisses relativ zur Aufnahme in Einführrichtung ausgebildet sind.

Diese Maßnahme hat den Vorteil, daß mittels einer geeigneten Steuerung ein Luftspalt beliebiger Breite eingestellt werden kann, je nachdem, wie dies für den einzelnen Einspritzvorgang optimal ist.

Bei einer anderen Variante der Erfindung können die Distanzmittel aber auch als Abstandshalter zwischen Kunststofferzeugnis und Aufnahme ausgebildet sein.

Diese Maßnahme hat den Vorteil, daß die Distanzmittel in sehr einfacher Weise mechanisch realisiert werden.

Bei weiteren Ausführungsbeispielen der Erfindung wird die Kühlplatte mittels Vakuum an den ebenen Oberflächenabschnitt angelegt. Vorrichtungsmäßig geschieht dies bevorzugt dadurch, daß die Kühlplatte an ihrer an dem ebenen Oberflächenabschnitt des Kunststofferzeugnisses anliegenden Stirnseite mit einer Ansaugöffnung versehen ist.

Diese Maßnahme hat den Vorteil, daß das Kunststofferzeugnis von der Kühlplatte wirksam ergriffen werden kann, wobei das Kunststofferzeugnis unter der Wirkung des Vakuums fest an die kühle Oberfläche der Kühlplatte angepreßt wird.

Weiterhin ist bevorzugt, wenn die Kühlplatte widerstandslos mit dem Kunststofferzeugnis in die Aufnahme eingeführt wird bzw. einführbar ist. Dies kann z.B. dadurch geschehen, daß die Kühlplatte mit einer drucklosen Kolben-Zylinder-Einheit kombiniert wird.

Diese Maßnahmen haben den Vorteil, daß das Kunststofferzeugnis zusammen mit der Kühlplatte praktisch ohne Krafteinwirkung innerhalb der Aufnahme verschoben werden kann.

Um das Kunststofferzeugnis in die Aufnahme einzuführen, sind unterschiedliche Wege möglich.

Gemäß einer Variante der Erfindung wird dies dadurch bewirkt, daß das Kunststofferzeugnis in an sich bekannter Weise mittels Vakuum in die Aufnahme eingezogen wird. Hierzu sind Mittel zum Erzeugen eines Vakuums in der Aufnahme vorgesehen.

Diese Maßnahme hat den Vorteil, daß der Einführvorgang mit relativ einfachen Mitteln vollzogen werden kann.

Alternativ kann jedoch auch vorgesehen sein, das Kunststofferzeugnis mittels einer Verfahreinheit in die Aufnahme einzuführen. Hierzu sind entsprechende Mittel zum Verfahren der Kühlplatte in der Aufnahme erforderlich.

Diese Maßnahme hat den Vorteil, daß eine präzise Lageregelung des Kunststofferzeugnisses innerhalb der Aufnahme möglich ist. Dies hat, wie bereits erwähnt, den weiteren Vorteil, daß gegebenenfalls ein Luftspalt gewünschter Breite zwischen Kunststofferzeugnis und Aufnahme eingestellt werden kann.

Bei der Verfahreinheit ist bevorzugt vorgesehen, daß diese mittels eines Parameters eines Mediums gesteuert wird, das zwischen das Kunststofferzeugnis und die Aufnahme geleitet wird. Hierzu umfassen die Mittel zum Verfahren der Kühlplatte eine in Einführrichtung wirkende Verfahreinheit, es ist ferner ein Sensor zum Erfassen eines Parameters eines zwischen dem Kunststofferzeugnis und der Aufnahme eingeleiteten Mediums vorgesehen, und die Verfahreinheit ist schließlich in Abhängigkeit vom Ausgangssignal des Sensors regelbar.

Diese Maßnahme hat den Vorteil, daß für eine präzise Lageregelung keine komplizierten Wegaufnehmer erforderlich sind, die in der sehr warmen Umgebung eines Werkzeugs einer Kunststoff-Spritzgießmaschine ohnehin problematisch in ihrer Funktion wären. Statt dessen wird der bei Ausführungsbeispielen der Erfindung ohnehin vorgesehene Mediumstrom zum Kühlen des Kunststofferzeugnisses eingesetzt, weil bei einer Annäherung des Kunststofferzeugnisses an die Aufnahme eine entsprechende Veränderung des Durchsatzes, des Drucke und der Fließgeschwindigkeit auftritt. Diese Parameter können zur Regelung herangezogen werden.

Bei weiteren Ausführungsbeispielen der Erfindung wird das Kunststofferzeugnis auf der von dem ebenen Oberflächenabschnitt abgewandten Seite mittels eines Mediumstromes gekühlt. Hierzu sind entsprechende Mittel vorgesehen.

Diese Maßnahme hat den Vorteil, daß eine praktisch allseitige Kühlung des Kunststofferzeugnisses möglich wird, so daß dadurch die Kühlzeit verkürzt und damit auch die Zykluszeit entsprechend vermindert werden kann.

Dies gilt insbesondere dann, wenn das Kunststofferzeugnis auf der von dem ebenen Oberflächenabschnitt abgewandten Seite hohl ist und dort mittels des Mediumstromes gekühlt wird.

In diesem Falle wird nämlich die Form des Kunststofferzeugnisses ausgenutzt und durch den hohlen Innenraum des Kunststofferzeugnisses bzw. durch ein Einleiten eines Kühlmediums in diesen Hohlraum eine weitere Verbesserung der Kühlwirkung erreicht.

Als Kühlmedium können verschiedene Flüssigkeiten oder Gase verwendet werden, bevorzugt ist jedoch die Verwendung von Luft.

Bei weiteren Ausführungsbeispielen der Erfindung ist das Kunststofferzeugnis im Bereich des ebenen Oberflächenabschnittes dickwandig ausgebildet, und eine dem ebenen Oberflächenabschnitt gegenüberliegende Innenseite wird durch Anlegen einer gekühlten Oberfläche gekühlt. Hierzu ist eine entsprechende Kühleinheit mit einer gekühlten Stirnseite vorgesehen.

Diese Maßnahme hat den Vorteil, daß durch Kontaktkühlung eine weitere Beschleunigung des Kühlvorganges und damit eine weitere Reduzierung der Zykluszeit erreicht wird.

Bei entsprechender Formgebung des Kunststofferzeugnisses kann die Kühleinheit eine zu der hohlen Seite im wesentlichen komplementäre Form aufweisen und in die hohle Seite des Kunststofferzeugnisses eingeführt werden.

Diese Maßnahme hat den Vorteil, daß das Kunststofferzeugnis wirklich allseitig und damit in der kürzestmöglichen Zeit gekühlt wird.

Die Kühleinheit kann zu diesem Zweck an ihrer Oberfläche mit Austrittsöffnungen für ein Kühlmedium versehen sein.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematisierter Seitenansicht, teilweise geschnitten, ein Ausführungsbeispiel einer erfindungsgemäßen Vorrichtung zur Erläuterung des erfindungsgemäßen Verfahrens;
- Fig. 2: die Anordnung gemäß Fig. 1, jedoch in einer anderen Betriebsstellung und mit weiteren Einzelheiten;
- Fig. 3: eine Variante zur Vorrichtung gemäß Fig. 1 und 2 in ähnlicher Darstellung.

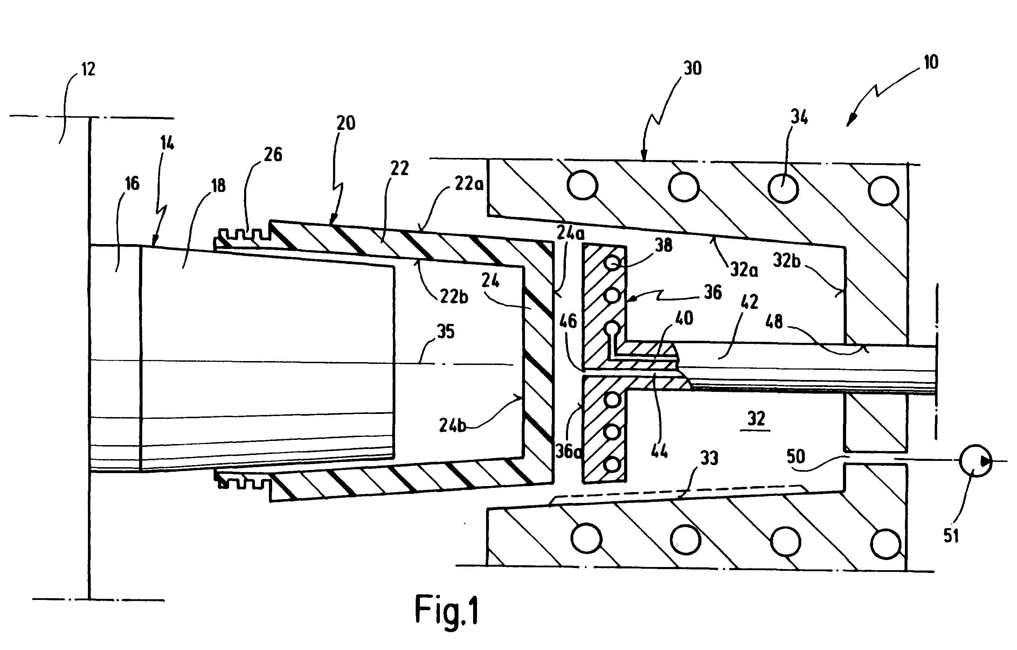

In Fig. 1 bezeichnet 10 insgesamt einen Ausschnitt aus einer Kunststoff-Spritzgießmaschine. Auf einer Werkzeughälfte 12 befindet sich ein Kern 14 mit einem zylindrischen Abschnitt 16 und einem konischen Abschnitt 18. Vom Kern 14 wurde soeben ein gerade gespritztes Kunststofferzeugnis 20 abgenommen.

Das Kunststofferzeugnis 20 umfaßt eine dicke konische Wand 22 mit einer Außenseite 22a und einer Innenseite 22b. Es umfaßt ferner einen ebenen, ebenfalls dickwandigen Boden 24 mit einer Außenseite 24a und einer Innenseite 24b. An der in Fig. 1 linken Seite schließt sich an die konische Wand 22 ein zylindrischer Gewindeabschnitt 26 an.

Das Kunststofferzeugnis 20 ist im dargestellten Beispielsfall eine Cremedose, wie sie in der kosmetischen Industrie verwendet wird.

In der rechten Hälfte von Fig. 1 ist eine Aufnahmeeinheit 30 abgebildet. Die Aufnahmeeinheit 30 umfaßt eine konische Aufnahme 32 mit einer konischen Innenwand 32a und einem ebenen Boden 32b. Auf der konischen Wand 32a können in Mantellinienrichtung verlaufende Rippen 33 oder Stege über den Umfang verteilt angeordnet sein.

Die Aufnahmeeinheit 30 ist mit Kühlkanälen 34 versehen. Werden die Kühlkanäle 34 von einem geeigneten Kühlmedium durchströmt, wird dadurch die konische Aufnahme 32 insgesamt gekühlt.

In der konischen Aufnahme 32, deren Achse mit 35 angedeutet ist, ist eine Platte 36 in Achsrichtung verfahrbar angeordnet. Die Kühlplatte 36 ist auf ihrer in Fig. 1 linken Seite mit einer Stirnseite 36a versehen. Die Kühlplatte 36 ist mit Kühlkanälen 38 versehen. Werden diese von einem Kühlmedium durchströmt, wird dadurch die Stirnseite 36a gekühlt. Die Kühlkanäle 38 sind mit einem axialen Versorgungskanal 40 verbunden, durch den das Kühlmedium zu- und abgeleitet werden kann.

Der axiale Versorgungskanal 40 läuft durch eine Stange 42, die in Fig. 1 nur abgebrochen dargestellt ist. In der Stange 42 verläuft ferner eine Vakuumleitung 44, die in einer Mündung 46 in der Stirnseite 36a ausläuft.

Die konische Aufnahme 32 ist ferner über einen Kanal 50 mit dem Außenraum verbunden. An den Kanal 50 kann eine Vakuumpumpe 51 angeschlossen werden, um in der konischen Aufnahme 32 einen Unterdruck zu erzeugen.

Die konische Aufnahme 32 ist im wesentlichen komplementär zum Kunststofferzeugnis 20 ausgebildet. Im dargestellten Beispielsfall sind also die Kegelwinkel gleich groß. Trotzdem muß bemerkt werden, daß in den Figuren nur ein Beispiel dargestellt ist. Die Aufnahme 32 kann bei anderen Ausführungsbeispielen der Erfindung auch anders ausgestaltet sein. Sie muß auch nicht eine sich verjüngende Form aufweisen sondern kann das Kunststofferzeugnis in axialer Richtung ohne Verjüngung aufnehmen. Die Querschnittsform der Aufnahme 32 ist praktisch beliebig. Neben der in den Figuren dargestellten Konusform kann die Aufnahme auch pyramidenartig, zylindrisch, prismatisch, elliptisch oder sonstwie geformt sein.

Es ist ferner nicht unbedingt erforderlich, daß die Außenseite 24a des Kunststofferzeugnisses 20 eben ist. Sie kann auch z.B. ballig (konkav oder konvex) ausgebildet sein. Wichtig ist nur, daß die Kühlplatte 36 auf ihrer Stirnseite 36a dazu komplementär ausgebildet ist, sich also flächig an die Außenseite 22a des Kunststofferzeugnisses 20 anlegen kann.

Um das Kunststofferzeugnis 20 in die Aufnahme 32 einzuführen, fährt die Kühlplatte 36 in Axialrichtung nach links auf das Kunststofferzeugnis 20 zu, bis die Stirnseite 36a an der Außenseite 24a des Bodens 24 anliegt. Wenn nun in der Vakuumleitung 44 ein Unterdruck erzeugt wird, hat dies zur Folge, daß der ebene Boden 24 des Kunststofferzeugnisses 20 fest an die Kühlplatte 36 angepreßt und damit effektiv gekühlt wird.

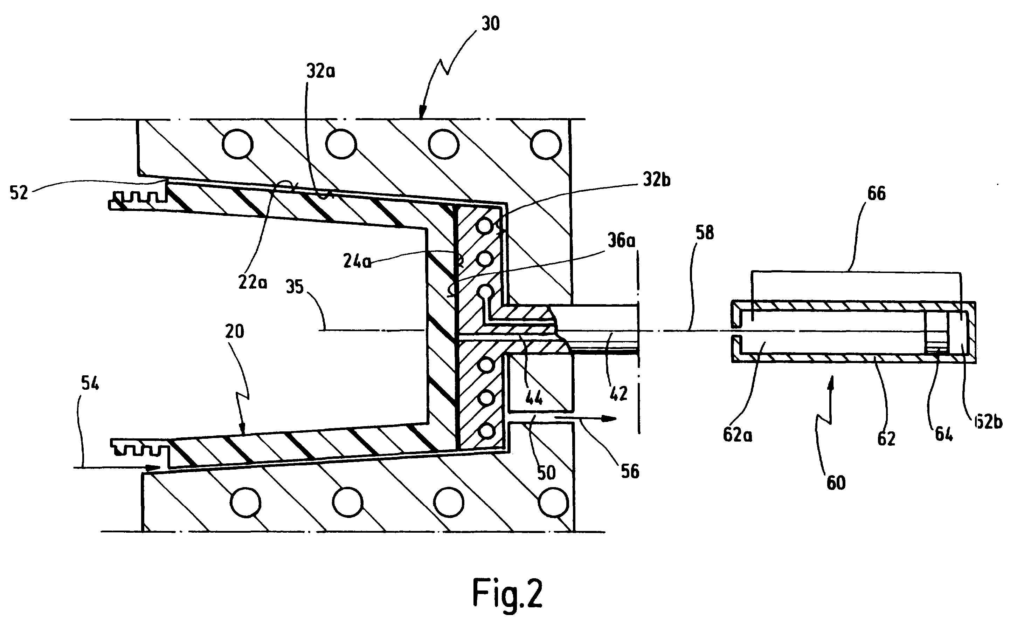

Gleichzeitig wird das Kunststofferzeugnis 20 durch Verfahren der Kühlplatte 36 nach rechts in die Aufnahme 32 eingeführt. Der Endzustand ist in Fig. 2 dargestellt.

Man erkennt, daß das Kunststofferzeugnis 20 so weit in die Aufnahme 32 eingeführt wurde, daß zwischen der Außenseite 22a der konischen Wand 22 und der konischen Wand 32a der Aufnahme 32 ein Luftspalt 52 verbleibt.

In diesen Luftspalt 52 kann nun ein Medium, beispielsweise Luft, eingeführt werden, wie mit einem Pfeil 54 angedeutet. Das Medium umströmt das Kunststofferzeugnis 20 auf der gesamten konischen Außenseite 22a und kann dann Z.B. durch den Kanal 50 nach außen abströmen, wie mit einem Pfeil 56 angedeutet.

Ist eine Vakuumpumpe 51 an den Kanal 50 angeschlossen, so kann die Vakuumpumpe 51 das Einsaugen von Luft (Pfeil 54) in den Luftspalt 52 und die Abfuhr der Luft (Pfeil 56) besorgen.

Um eine möglichst kraftlose aber trotzdem lagestabile Führung der Kühlplatte 36 in Axialrichtung zu ermöglichen, ist die Stange 42 vorzugsweise mittels einer Verbindung 58 an eine Kolben-Zylinder-Einheit 60 angeschlossen. Die Einheit 60 umfaßt einen Zylinder 62 mit zwei Zylinderräumen 62a und 62b, die beidseits eines im Zylinder 62 laufenden Kolbens 64 angeordnet sind. Die beiden Räume 62a und 62b sind mittels einer Leitung 66 verbunden, so daß die Einheit 60 insgesamt drucklos arbeitet. Dies bedeutet, daß man die Kühlplatte 36 mit minimaler Axialkraft in Richtung der Achse 35 verschieben kann, wobei das Hydraulikmittel in diesem Fall zwischen den Räumen 62a und 62b über die Leitung 66 ausgetauscht wird.

Um den Luftspalt 52 zwischen Kunststofferzeugnis 20 und Aufnahme 32 einzustellen, können unterschiedliche Wege verfolgt werden.

Wie bereits zu Fig. 1 erwähnt wurde, kann die Aufnahme 32 mit axial verlaufenden Rippen 33 versehen werden, deren Höhe gerade der Breite des gewünschten Luftspaltes 52 entspricht. Wenn nun das Kunststofferzeugnis 20 in die Aufnahme 32 eingeführt wird, kommt es auf den Rippen 33 zum Anschlag. Ein Kühlmedium kann dann zwischen den Rippen 33 in der bereits beschriebenen Weise um das Kunststofferzeugnis 20 herum strömen.

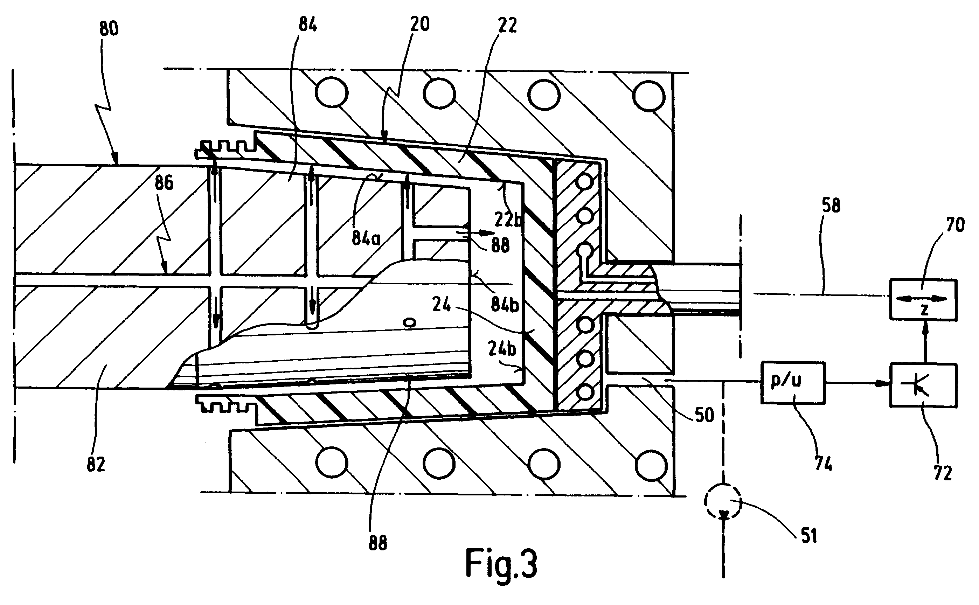

Bei einer etwas aufwendigeren Lösung, wie es in Fig. 3 gezeigt ist, wird zum Verfahren der Kühlplatte 36 über die Verbindung 58 eine Lineareinheit (z-Einheit) 70 verwendet. Die Lineareinheit 70 ist von an sich üblicher Bauart und braucht daher im einzelnen nicht näher erläutert zu werden. Die Lineareinheit 70 wird über einen Regler 72 angesteuert. Der Regler 72 empfängt seine Steuersignale von einem Sensor 74. Der Sensor 74 erfaßt einen Parameter im Kanal 50, beispielsweise den Druck des dort abströmenden Mediums. Es können aber auch der Druckabfall über den Kanal 50, die Durchflußmenge des Mediums, die Ausströmgeschwindigkeit oder dergleichen erfaßt werden. Diese Parameter sind ein Maß dafür, wie weit sich das Kunststofferzeugnis 20 bereits der Aufnahme 32 angenähert hat. Auf diese Weise ist daher eine präzise Lageregelung möglich.

Wie bereits mehrfach erwähnt wurde, handelt es sich bei dem Kunststofferzeugnis 20 um ein dickwandiges, hohles Teil von gedrungener Kegelstumpfform.

Man kann daher zur Erhöhung der Kühlwirkung auch die "Rückseite", d.h. die in den Figuren links liegende Seite des Kunststofferzeugnisses, mittels eines Kühlmediums anströmen.

Dies kann in ganz einfacher Weise dadurch geschehen, daß man z.B. in der Position gemäß Fig. 2 von links ein Kühlmedium an die hohle Innenseite 22b bzw. die Innenseite 24b des Bodens 24 heranführt.

Bei der in Fig. 3 gezeigten Variante wird jedoch eine separate Kühleinheit 80 verwendet, die mit einem zylindrischen Abschnitt 82 und einem konischen Abschnitt 84 versehen ist, wobei eine komplementäre Formgebung zur hohlen Innenseite des Kunststofferzeugnisses 20 gewählt wurde. Eine konische Außenseite 84a sowie eine ebene Stirnseite 84b des konischen Abschnittes 84 entsprechen daher in der Formgebung den Innenseiten 22b und 24b des Kunststofferzeugnisses 20.

Die Kühleinheit 80 ist vorzugsweise mit einem internen Kanalsystem 86 versehen, durch das ein Kühlmedium geleitet werden kann, beispielsweise Luft. In diesem Fall kann das Kühlmedium auch aus dem Kanalsystem 86 austreten, und zwar über Öffnungen 88, die über den Umfang der Außenseite 84a bzw. über die Stirnseite 84b verteilt sind. Darüber hinaus kommt auch eine Kontaktkühlung in Frage, wenn sich der konische Abschnitt 84 und der zylindrische Abschnitt 82 der Kühleinheit 80 an die Innenseite des Kunststofferzeugniss 20 anlegen.

## Patentansprüche

1. Verfahren zum Handhaben eines Kunststofferzeugnisses (20) nach dessen Entnahme aus einem Werkzeug (12) einer Kunststoff-Spritzgießmaschine (10), wobei das Kunststofferzeugnis (20) mindestens einen ebenen Oberflächenabschnitt (24a) aufweist und der Oberflächenabschnitt (24a) durch Anlegen einer Kühlplatte (36) flächig gekühlt wird, dadurch gekennzeichnet, daß nach dem Anlegen der Kühlplatte (36) das Kunststofferzeugnis (20) mit dem ebenen Oberflächenabschnitt (24a) voran in eine das Kunststofferzeugnis (20) im übrigen umgebende Aufnahme (32) eingeführt und dort an mindestens einem weiteren Oberflächenabschnitt (22a) gekühlt wird.

2. Verfahren nach Anspruch 1, dadurch gekennzeichnet, daß das Kunststofferzeugnis (20) bis auf einen Luftspalt (52) an die Aufnahme (32) herangeführt und alsdann an dem weiteren Oberflächenabschnitt (22a) mittels eines durch den Luftspalt (52) geleiteten Mediumstromes (54, 56) gekühlt wird.

3. Verfahren nach Anspruch 1 oder 2, dadurch gekennzeichnet, daß die Kühlplatte (36) mittels Vakuum an den ebenen Oberflächenabschnitt (24a) angelegt wird.

4. Verfahren nach einem oder mehreren der Ansprüche 1 bis 3, dadurch gekennzeichnet, daß die Kühlplatte (36) widerstandslos mit dem Kunststofferzeugnis (20) in die Aufnahme (32) eingeführt wird.

5. Verfahren nach einem oder mehreren der Ansprüche 1 bis 4, dadurch gekennzeichnet, daß das Kunststofferzeugnis (20) mittels Vakuum (50, 51) in die Aufnahme (32) eingezogen wird.

6. Verfahren nach einem oder mehreren der Ansprüche 1 bis 4, dadurch gekennzeichnet, daß das Kunststofferzeugnis (20) mittels einer Verfahreinheit (70) in die Aufnahme (32) eingeführt wird, wobei vorzugsweise die Verfahreinheit (70) mittels eines Parameters eines Mediums gesteuert wird, das zwischen das Kunststofferzeugnis (20) und die Aufnahme (32) geleitet wird.

7. Verfahren nach einem oder mehreren der Ansprüche 1 bis 6, dadurch gekennzeichnet, daß das Kunststofferzeugnis (20) auf der von dem ebenen Oberflächenabschnitt (24a) abgewandten Seite mittels eines Mediumstromes gekühlt wird.

8. Verfahren nach Anspruch 5 oder 6, dadurch gekennzeichnet, daß das Kunststofferzeugnis (20) auf der von dem ebenen Oberflächenabschnitt (24a) abgewandten Seite hohl ist und dort mittels des Mediumstromes gekühlt wird.

9. Verfahren nach einem oder mehreren der Ansprüche 2 bis 8, dadurch gekennzeichnet, daß Luft als Medium verwendet wird.

10. Verfahren nach einem oder mehreren der Ansprüche 7 bis 9, dadurch gekennzeichnet, daß das Kunststofferzeugnis (20) im Bereich des ebenen Oberflächenabschnittes (24a) dickwandig (24) ausgebildet ist und daß eine dem ebenen Oberflächenabschnitt (24a) gegenüberliegende Innenseite (24b) durch Anlegen einer gekühlten Oberfläche (84b) gekühlt wird.

11. Vorrichtung zum Handhaben eines Kunststofferzeugnisses (20) nach dessen Entnahme aus einem Werkzeug (12) einer Kunststoff-Spritzgießmaschine (10), wobei das Kunststofferzeugnis (20) mindestens einen ebenen Oberflächenabschnitt (24a) aufweist und ferner die Vorrichtung eine Kühlplatte (36) sowie Mittel zum Anlegen der Kühlplatte (36) an den ebenen Oberflächenabschnitt (24a) umfaßt, dadurch gekennzeichnet, daß die Vorrichtung weiterhin eine zum Kunststofferzeugnis (20) im wesentlichen komplementäre und kühlbare Aufnahme (32) aufweist, und daß Mittel vorgesehen sind, um nach dem Anlegen der Kühlplatte (36) das Kunststofferzeugnis (20) mit dem ebenen Oberflächenabschnitt (24a) voran in die Aufnahme (32) einzuführen und dort an mindestens einem weiteren Oberflächenabschnitt (22a) zu kühlen.

12. Vorrichtung nach Anspruch 11, dadurch gekennzeichnet, daß Distanzmittel vorgesehen sind, um im eingeführten Zustand des Kunststofferzeugnisses (20) einen Luftspalt (52) zwischen Kunststofferzeugnis (20) und Aufnahme (32) einzustellen, wobei vorzugsweise das Kunststofferzeugnis (20) und die Aufnahme (32) sich in Einführrichtung (z) verjüngen, und die Distanzmittel als Lageregelung des Kunststofferzeugnisses (20) relativ zur Aufnahme (32) in Einführrichtung (z) ausgebildet oder die Distanzmittel als Abstandshalter (33) zwischen Kunststofferzeugnis (20) und Aufnahme (32) ausgebildet sind.

13. Vorrichtung nach Anspruch 11 oder 12, dadurch gekennzeichnet, daß Mittel (58, 70, 72, 74) zum Verfahren der Kühlplatte (36) in der Aufnahme (32) vorgesehen sind, wobei vorzugsweise die Mittel (58, 70, 72, 74) eine in Einführrichtung (z) wirkende Verfahreinheit (70) umfassen, daß ein Sensor (74) zum Erfassen eines Parameters eines zwischen dem Kunststofferzeugnis (20) und der Aufnahme (32) eingeleiteten Mediums vorgesehen ist, und daß die Verfahreinheit (70) in Abhängigkeit vom Ausgangssignal des Sensors (74) regelbar (72) ist.
